(19) Europäisches Patentamt / European Patent Office / Office européen des brevets

(11) **EP 3 359 430 B1**

(12) **EUROPÄISCHE PATENTSCHRIFT**

(45) Veröffentlichungstag und Bekanntmachung des Hinweises auf die Patenterteilung:
**27.11.2019  Patentblatt 2019/48**

(21) Anmeldenummer: **16770929.4**

(22) Anmeldetag: **27.09.2016**

(51) Int Cl.:
**B60T 8/17** *(2006.01)*        **B60T 8/1761** *(2006.01)*

(86) Internationale Anmeldenummer:
**PCT/EP2016/072964**

(87) Internationale Veröffentlichungsnummer:
**WO 2017/060126 (13.04.2017 Gazette 2017/15)**

(54) **VORRICHTUNG UND VERFAHREN ZUR ADAPTIVEN GLEITSCHUTZSTEUERUNG**

DEVICE AND METHOD FOR ADAPTIVE ANTI-SKID CONTROL

DISPOSITIF ET PROCÉDÉ DE COMMANDE ANTI-GLISSEMENT ADAPTATIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2015  DE 102015116862**

(43) Veröffentlichungstag der Anmeldung:
**15.08.2018  Patentblatt 2018/33**

(73) Patentinhaber: **KNORR-BREMSE Systeme für Schienenfahrzeuge GmbH 80809 München (DE)**

(72) Erfinder:
• **RASEL, Thomas**
  **85635 Höhenkirchen-Siegertsbrunn (DE)**
• **MAYER, Reinhold**
  **85757 Karlsfeld (DE)**

(56) Entgegenhaltungen:
EP-A1- 0 716 001        EP-A1- 2 147 840
WO-A1-2006/113954    WO-A2-2013/034714
DE-A1- 4 333 281

**Beschreibung**

Die vorliegende Erfindung betrifft eine Vorrichtung und ein Verfahren zur adaptiven Ansteuerung einer Bremsanlage eines Schienenfahrzeugs mittels einer Gleitschutzsteuerfunktion, die ein Blockieren eines Rads des Schienenfahrzeuges bei ungünstigen Adhäsionsbedingungen im Rad-Schiene-Kontakt verhindert.

Gleitschutzsysteme für Schienenfahrzeuge üben eine ähnliche Funktion aus, wie ein Antiblockiersystem (ABS) eines Kraftfahrzeugs. Während des Abbremsens eines Schienenfahrzeugs kann es aufgrund sich ändernder Kraftschlussbedingungen in der Kontaktfläche zwischen Rad und Schiene zu einem plötzlichen Achsstillstand kommen, durch den bei verlängertem Bremsweg eine den Rundlauf verschlechternde Flachstelle im Radreifen entstehen kann. Eine wesentliche Aufgabe von Gleitschutzsystemen ist das Verhindern des Achsstillstands während der Bremsung, bspw. durch geeignetes automatisches Entlüften und Belüften eines pneumatischen Bremszylinders.

Zur Bremsung legt der Triebfahrzeugführer den Bremssteuerdruck an, wodurch sich nach kurzer Zeit ein entsprechender Bremszylinderdruck in den pneumatischen Bremszylindern an den Radsätzen einstellt. Durch das so eingeleitete Bremsmoment wird der Radsatz verzögert, wodurch in den Radaufstandsflächen ein Schlupf zwischen Rad und Schiene entsteht. Der Schlupf ist im Bremsfall wie folgt definiert:

$$s = (v - R\omega)/v,$$

wobei s den Schlupf, v die Fahrzeuggeschwindigkeit, ω die Achsgeschwindigkeit und R den nominalen Radradius kennzeichnen. Die das Schienenfahrzeug verzögernde Reibungskraft ist das Produkt aus der vom Schlupf abhängigen Kraftschlussbeanspruchung und der Radaufstandskraft. Mit zunehmendem Schlupf steigt die Kraftschlussbeanspruchung steil an und fällt nach Erreichen eines Maximalwerts langsam ab. Der Maximalwert des Kraftschlusses hängt dabei von verschiedenen Einflussfaktoren ab, u.a. von den Witterungsbedingungen und dem Zustand der Schiene. Bei glatter oder mit Herbstlaub bedeckter Schiene ist er besonders gering. Bei schlupffreier Fahrt ist keine Kraftschlussbeanspruchung vorhanden.

Bei einem Schienenfahrzeug ist also die erzielbare Brems- bzw. Zugkraft proportional zum verfügbaren Kraftschluss zwischen Rad und Schiene. Der maximal zur Verfügung stehende Kraftschluss mit dem dazu gehörige Radschlupf hängt dabei von einer Vielzahl von Parametern ab. Nach dem aktuellen Stand der Technik, wie er z.B. in der DE 10 2006 057 813 A1 beschrieben ist, lassen sich im Wesentlichen zwei Schlupfbereiche unterscheiden. Einerseits Kraftschlussverhältnisse die einen hohen Radschlupf erfordern, wie er z.B. bei Versuchen zur Norm UIC 541-05 des internationalen Eisenbahnverbands (Union internationale des chemins de fer (UIC)) bei wässrigen Zwischenschichten üblich ist. Andererseits einen kleinen Radschlupf, wenn die Zwischenschichten z.B. aus Herbstlaub oder öligen Substanzen bestehen.

Ein Gleitschutzsystem bzw. eine Traktionskontrolle soll also den passenden Radschlupf zur Maximierung des Kraftschlusses einstellen. Herkömmliche nach UIC 541-05 zugelassene Gleitschutzsysteme regeln einen typischen Radschlupf in dem durch die UIC541-05 zulässigen Schlupfbereich. Dieser Schlupfbereich ist auf die in der Norm definierten Versuchsbedingungen mit einem Wasser-Seife Gemisch als Kraftschluss abgestimmt. In der vorgenannten DE 10 2006 057 813 A1 werden basierend auf Erfahrungen aus Fahrversuchen und Fahrbetrieb zwei verschiedene Regelbereiche unterschieden. Einen Normalschlupfbereich (<30%) und einen Niedrigschlupfbereich (<5%). Die Umschaltung zwischen den beiden Schlupfbereichen erfolgt jahreszeitbedingt (Herbst), durch nicht ausreichende Verzögerungsleistung im hohen Radschlupf oder durch das Bewerten von Radsatzverzögerungen.

In weiteren Gleitschutzverfahren wird bspw. ein modellbasierter Ansatz verfolgt, bei dem Eigenschaften des im Rad-Schiene-Kontakt vorhandenen Zwischenmediums identifiziert werden und der zur Erzielung des maximalen Kraftschlusses notwendige optimale Radschlupf von diesen Eigenschaften abgeleitet wird. Auch eine Einstellung des Schlupfs auf das Kraftschlussmaximum basierend auf einer achsweisen Messung des Kraftschluss-Schlupf-Zusammenhangs wurde vorgeschlagen. Ein anderer Ansatz basiert darauf, für den Radschlupf keine Adaption vorzunehmen und stattdessen 50% der Achsen im Standardschlupfbereich (gemäß UIC 541-05) und die restlichen 50% in einem alternativen kleinen Schlupfbereich zu regeln.

Herkömmliche Gleitschutzsysteme gemäß dem Stand der Technik sind im Wesentlichen auf einen Kraftschlusstyp optimiert. Eine Anpassung an unterschiedliche Verhältnisse findet nicht statt. Erfordert der aktuelle Kraftschluss einen kleinen oder sehr kleinen Radschlupf, so arbeiten die Achsen in einem nicht optimalen Radschlupf.

Bei einer Anpassung des Schlupfbereichs müssen fahrzeugspezifische Parameter (wie Beschleunigung, Masse, Kraft etc.) berücksichtigt werden. Das Verlassen des Zustands der geringen Verzögerung (kleiner Schlupf) ist nicht näher erläutert. Singuläre kurzzeitige Abweichungen in der Radsatzbeschleunigung können zu Fehlinterpretationen des passenden Schlupfbereichs führen. Meist werden eine Vielzahl von Parametern und/oder Kennfelder mit Referenzdaten benötigt, um die zur Entscheidung des Schlupfbereichs notwendigen Zusammenhänge zwischen Kraftschluss und Schlupf zu bestimmen. Bei Systemen, in denen die Einschätzung über den passenden Radschlupf des gesamten Systems auf der Rückmeldung einer einzelnen Achse beruht, wird vorausgesetzt, dass an allen Achsen ein ähnlicher Kraftschlusstyp vorliegt.

Der oben zuletzt genannte adaptionslose Ansatz stellt einen Kompromiss dar. Er bietet den Vorteil dass keine Parameter über das Schienenfahrzeug bekannt sein müssen und liefert eine definierte konstante Radschlupfverteilung. Damit kann eine Fehladaption vermieden werden. Allerdings arbeiten in Konsequenz nur 50% der Achsen im passenden Schlupfbereich. Die verfügbare Systembremskraft ist damit größer als die eines fehladaptierten aber kleiner als die eines korrekt adaptierten Systems.

Eine Vorrichtung sowie ein Verfahren zur adaptiven Ansteuerung einer Bremsanlage eines Schienenfahrzeuges mittels einer Gleitschutzsteuerfunktion gemäß dem Oberbegriff der unabhängigen Ansprüche ist in der WO 2006 113954 A1 offenbart.

Der vorliegenden Erfindung liegt daher die Aufgabe zugrunde, ein Gleitschutzsystem mit verbesserter Adaptionswirkung bereitzustellen.

Dies wird erfindungsgemäß durch die Lehre der beigefügten unabhängigen Ansprüche erreicht. Vorteilhafte Ausgestaltungen und Weiterbildungen der Erfindung sind Gegenstand der abhängigen Ansprüche.

Zur Lösung der Aufgabe werden eine Vorrichtung und ein Verfahren zur adaptiven Ansteuerung einer Bremskraftanlage eines Schienenfahrzeugs vorgeschlagen, wobei die Bremsanlage nach Maßgabe eines vorbestimmten ersten und zweiten Schlupfparameterbereichs gesteuert wird, wobei der erste Schlupfparameterbereich ein Makroschlupfbereich mit höherem zulässigen Schlupfbereich ist und der zweite Schlupfparameterbereich ein Mikroschlupfbereich mit niedrigerem zulässigen Schlupfbereich ist, und wobei eine maximal im Mikroschlupfbereich verfügbare Bremskraft und eine im aktuellen Schlupfbereich erzielte mittleren Bremskraft der Bremsanlage bestimmt werden. Ein Übergang von dem Makroschlupfbereich in den Mikroschlupfbereich wird veranlasst, wenn ein Vergleich der bestimmten mittleren Bremskraft im Makroschlupfbereich mit der maximal im Mikroschlupfbereich verfügbaren Bremskraft eine unzureichende Schlupfwirkung im Makroschlupfbereich anzeigt. Alternativ kann auch ein Übergang von dem Mikroschlupfbereich in den Makroschlupfbereich veranlasst werden, wenn ein Vergleich der bestimmten mittleren Bremskraft im Makroschlupfbereich mit der maximal im Mikroschlupfbereich verfügbaren Bremskraft eine ausreichende Schlupfwirkung im Makroschlupfbereich anzeigt.

Bei einer Realisierung der Gleitschutzsteuerung unter Zuhilfenahme einer Computervorrichtung mit softwaregesteuertem Prozessor kann das beanspruchte Verfahren gemäß der vorliegenden Erfindung auch als Computerprogramm realisiert werden, wobei das Computerprogramm Codemittel umfasst zum Durchführen der Schritte gemäß Patentanspruch 9, wenn das Programm auf der Computervorrichtung ausgeführt wird.

Vorteilhaft an der beschriebenen Lösung ist, dass ein geschlossenes Vorgehen zur Gleitschutzsteuerung vorgeschlagen wird, das einen automatisierten Übergang vom Mikro- in den Makroschlupfbereich und umgekehrt ermöglicht. Dadurch kann der Radschlupf fortlaufend an die vorliegenden Kraftschlussverhältnisse angepasst werden. Aufgrund der Mittelung bei der Bremskraftermittlung wirken sich kurzzeitige statistische Schwankungen im Kraftschluss nicht auf die Einschätzung der Schlupfbereiche aus. Durch die Verwendung gemittelter und gefilterter Größen werden durchschnittliche ("unscharfe") Kraftschlusszustände und deren Änderungen bei der Steuerung berücksichtigt.

Eine aufwändige Korrelation von Kraftschluss und Schlupf zur Beurteilung von passenden Regelbereichen ist somit nicht notwendig. Alle Entscheidungen über die anzustrebenden Schlupfbereiche basieren auf Vergleichen von mittleren Bremskräften und Reibwegen. Daher ist die Kenntnis der momentan vorliegenden absoluten Kräfte nicht notwendig. Ein zur Bremskraft proportionales Signal ist ausreichend.

Prinzipiell ist auch keine Kenntnis von Parametern des Fahrzeugs oder der Bremskomponenten notwendig. Falls bremskraftproportionale Signale zur Unterscheidung von Kräften herangezogen werden, so sollten diese vorzugsweise entsprechend skaliert werden. In einem pneumatischen Bremssystem kann bspe. der gemittelte Bremsdruck als Maß für die Bremskraft verwendet werden

Gemäß einer ersten vorteilhaften Weiterbildung kann die Vorrichtung ausgestaltet sein, den Vergleich durch die Vergleichsmittel im Ansprechen auf ein Erreichen eines vorbestimmten Reibwegs zu veranlassen. Dadurch kann sichergestellt werden, dass der Vergleich der Eigenschaften das Makroschlupfbereichs mit denen des Mikroschlupfbereichs erst nach Erreichen des vorbestimmten Reibwegs erfolgt, so dass ein aussagekräftigeres Ergebnis erreicht werden kann. Der Reibweg kann dabei auf eine Weise beispielhaft als Produkt aus der Zeit und der Differenzgeschwindigkeit zwischen dem Rad und dem Schienenfahrzeug ermittelt werden.

Gemäß einer zweiten vorteilhaften Weiterbildung kann die Vorrichtung ausgestaltet sein, bei einem Übergang in den Mikroschlupfbereich zumindest eine Achse des Schienenfahrzeugs als Testachse für eine Testphase im Makroschlupfbereich zu belassen. Durch diese Maßnahme können die Eigenschaften des Makroschlupfbereichs auch nach dem Übergang in den Mikroschlupfbereich forlaufend parallel erfasst werden, um auch im Mikroschlupfbereich einen Vergleich zwischen den Eigenschaften des Makroschlupfbereichs und den Eigenschaften des Mikroschlupfbereichs vornehmen zu können. Die Testphase der Testachse kann dabei vorzugsweise nach Erreichen eines vorbestimmten eingebrachten Reibwegs oder nach einer maximalen Testzeit beendet werden, um dadurch einen aussagekräftigen Wert der mittleren Bremskraft an der im Makroschlupfbereich betriebenen Testachse zu erhalten. Die Testphase kann aber auch fortgesetzt werden, so dass Achsen

auch nach der Makroschlupftestphase im Zustand der Makroschlupfregelung verbleiben und sich somit Makroschlupfachsen ansammeln können.

Gemäß einer dritten vorteilhaften Weiterbildung kann die Vorrichtung ausgestaltet sein, die Schlupfbereichseinstellmittel zum Beenden des Makroschlupfbereichs der Testachse anzusteuern, wenn die mittlere Bremskraft an der Testachse geringer ist, als die maximal im Mikroschlupfbereich verfügbare Bremskraft. Somit wird die Testachse nur im Makroschlupfbereich betrieben, solange deren mittlere Bremskraft höher ist, als die maximal im Mikroschlupfbereich verfügbare Bremskraft.

Gemäß einer vierten vorteilhaften Weiterbildung kann die Vorrichtung weitere Vergleichsmittel aufweisen, zum Vergleichen der mittleren Bremskraft von im Makroschlupfbereich betriebenen Achsen mit der mittleren Bremskraft von im Mikroschlupfbereich betriebenen Achsen, und wobei die Vorrichtung die Schlupfbereichseinstellmittel veranlasst, alle Achsen der Bremsanlage im Makroschlupfbereich zu betreiben, wenn die mittlere Bremskraft der im Makroschlupfbereich betriebenen Achsen die mittlere Bremskraft der im Mikroschlupfbereich betriebenen Achsen übersteigt. Dabei kann die mittlere Bremskraft der Achsen eines Schlupfbereichs bspw. durch Aufsummieren mittlerer Bremskräfte der jeweiligen Achsen des Schlupfbereichs ermittelt werden. Gemäß der vorgeschlagenen Gleitschutzsteuerung wird der Makroschlupfbereich demnach erst verlassen, wenn ein gegenüber den aktuellen Eigenschaften des Makroschlupfbereichs verbessertes Potential der gesamten Bremsanlage im Mikroschlupfbereich zur Verfügung steht. Die mittlere erzielbare Bremskraft ergibt sich dabei, insbesondere im Mikroschlupfbereich, aus dem zur Verfügung gestellten Kraftschluss mit der potentiell verfügbaren Kraft und der zugehörigen Mikroschlupfregelung. Bei einem geringen Wirkungsgrad der Mikroschlupfregelung wird der Mikroschlupfbereich wieder verlassen.

Gemäß einer fünften vorteilhaften Weiterbildung können die Maximalkraftbestimmungsmittel bspw. ausgestaltet sein, die maximal im Mikroschlupfbereich verfügbare Bremskraft beim vollständigen Übergang des Rad-Schiene-Kontakts in die Gleitphase durch Korrelieren mit der dazu notwendigen Kraft zu ermitteln.

Weitere Vorteile, Merkmale und Anwendungsmöglichkeiten der vorliegenden Erfindung ergeben sich aus der nachfolgenden Beschreibung unter Bezugnahme auf die beigefügten Zeichnungsfiguren. Es zeigen:

Fig. 1: ein schematisches Blockschaltbild einer pneumatischen Bremsanlage mit Gleitschutzsteuerung, in der die vorliegende Erfindung eingesetzt werden kann;

Fig. 2: ein Flussdiagramm mit einer Gleitschutzsteuerung gemäß einem ersten Ausführungsbeispiel;

Fig. 3a und 3b: beispielhafte qualitive Verläufe einer Kraftsschlussbeanspruchung-Schlupf-Kurve bei unterschiedlichen Kraftschlusstypen unter Verwendung der vorgeschlagenen Gleitschutzsteuerung; und

Fig. 4: ein schematisches Funktionsblockschaltbild einer Gleitschutzsteuerung mit Adaptionsfunktion gemäß einem zweiten Ausführungsbeispiel.

Im Folgenden werden Ausführungsbeispiele der vorliegenden Erfindung am Beispiel einer Gleitschutzregelung für eine pneumatische Bremsanlage eines Schienenfahrzeugs beschrieben.

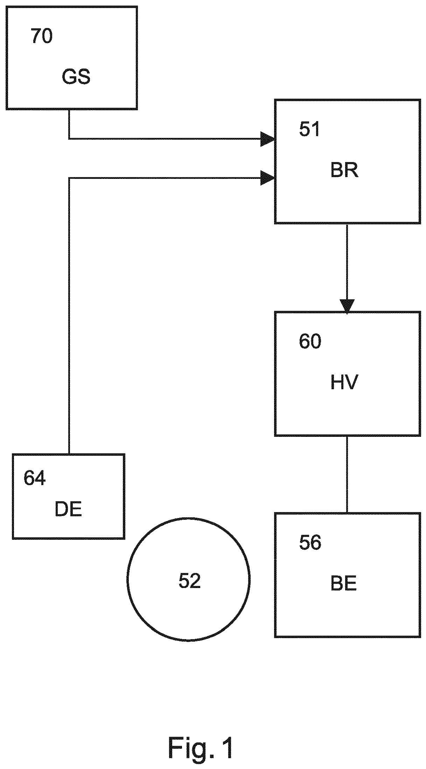

Fig. 1 zeigt schematisch eine Bremsanlage mit einer Bremsregelungseinrichtung (BR) 51, in der die erfindungsgemäße Gleitschutzregelung softwaregesteuert oder festverdrahtet realisiert werden kann. Die Bremsanlage ist dazu vorgesehen, eine Vielzahl von Rädern eines Schienenfahrzeugs, wie bspw. ein in Fig. 1 gezeigtes Rad 52, zu bremsen. Dazu ist dem beispielhaften Rad 52, wie auch allen anderen nichtgezeigten Rädern, eine Bremseinrichtung (BE) 56 der Bremsanlage zugeordnet. Eine Hauptsteuerventileinrichtung (HV) 60 der pneumatischen Bremsanlage ist mit der Bremsregelungseinrichtung 51 verbunden. Die Bremsregelungseinrichtung 51 ist dazu vorgesehen, die Hauptsteuerventileinrichtung 60 zum Bereitstellen eines gemeinsamen Bremsdrucks für die Bremseinrichtung 56 und die Bremseinrichtungen anderer Räder anzusteuern. Ferner verfügt die Bremseinrichtung 56 über eine Bremsventilanordnung, welche über die Bremsregelungseinrichtung 51 ansteuerbar ist und welche den von der Hauptsteuerventileinrichtung 60 bereitgestellten Bremsdruck nach Maßgabe der Bremsregelungseinrichtung 51 zu modifizieren vermag. Der von der Bremsventilanordnung modifizierte Bremsdruck wird bspw. an einen als Krafterzeuger dienenden pneumatischen Zylinder der Bremseinrichtung 56 angelegt, um eine Reibbremseinrichtung zu betätigen, in diesem Beispiel eine nicht näher gezeigte Klotzbremse. Dadurch kann durch die Bremsregelungseinrichtung 51 ein gewünschter Bremsdruck zum Bremsen des Rads 52 angesteuert werden. Ein Raddrehzahlsensor (DS) 64 ist dazu vorgesehen, die Raddrehzahl des Rades 52 zu messen und der Bremsregelungseinrichtung 51 über eine geeignete Verbindung ein entsprechendes Signal zuzuführen. Im Betrieb erfasst die Bremsregelungseinrichtung 51 entsprechende Drehzahldaten des Rads 52 über den Raddrehzahlsensor 64. Über eine Verbindung zu einem optionalen Geschwindigkeitssensor 70 erfasst die Bremsregelungseinrichtung zudem die Fahrtgeschwindigkeit des Schienenfahrzeugs. Daraus ermittelt die Bremsregelungseinrichtung 51 den Ist-Radschlupf des Rads 52.

Basierend auf dem bekannten Ist-Schlupf des Rads 52 steuert die Bremsregelungseinrichtung die Bremseinrichtung 56 derart an, dass das Rad 52 zumindest bei Beginn eines Bremsvorgangs in den gewünschten Schlupf-Sollwertbereich geregelt wird. Zur Regelung werden die Daten des Drehzahlsensors 64 verwendet. Die Bremsregelungseinrichtung 51 kann ferner mit einer Bremsdrucksensoreinrichtung (nicht gezeigt) verbunden sein, die einen an der Hauptsteuerventileinrichtung 60 anstehenden Hauptbremsdruck und/oder einen individuell bei der Bremseinrichtung 56 wirksamen Bremsdruck erfasst und an die Bremsregelungseinrichtung 51 übermittelt. Es kann auch vorgesehen sein, dass die Bremsregelungseinrichtung 51 die Fahrtgeschwindigkeit aus Drehzahlen mehrerer Räder ermittelt.

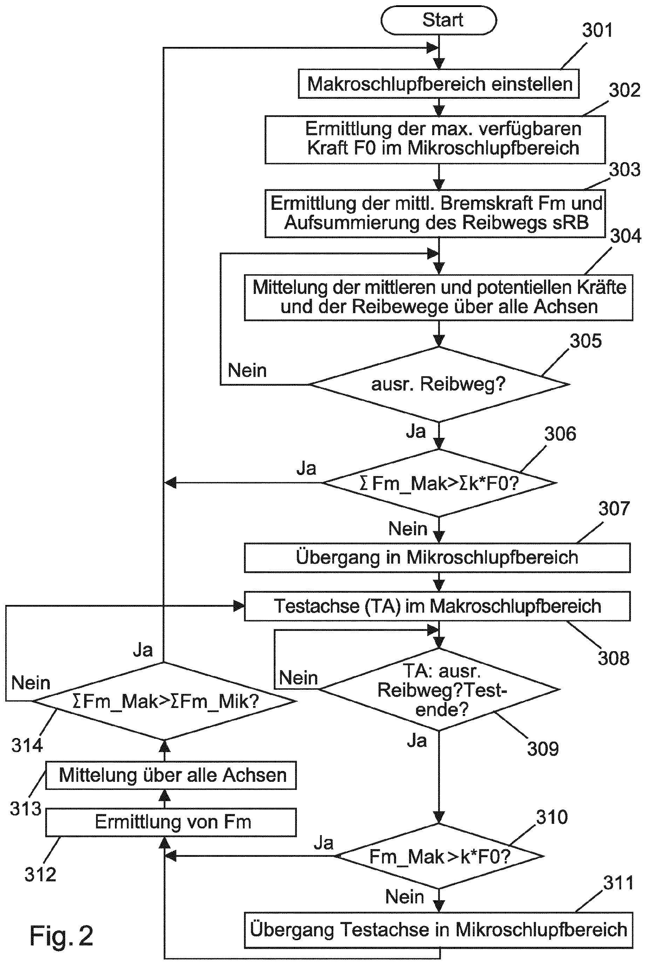

Fig. 2 zeigt ein Flußdiagramm einer adaptiven Gleitschutzregelung gemäß dem ersten Ausführungsbeispiel, wie sie bspw. in der vorgenannten Bremsregelungseinrichtung 51 gemäß Fig. 1 realisiert sein kann. Wie bereits erwähnt, kann die adaptive Gleitschutzregelung softwaregesteuert oder festverdrahtet implementiert werden.

Nach dem Start des Ablaufs wird zunächst im Schritt 301 der Makroschlupfbereich für die Regelung eingestellt. Dann wird in Schritt 302 die maximal im Mikroschlupfbereich verfügbare Bremskraft beim vollständigen Übergang des Rad-Schiene-Kontaktpunktes in das Gleiten bspw. durch Korrelieren mit der dazu notwendigen Kraft ermittelt und als potentiell verfügbare Kraft F0 des Mikroschlupfbereichs abgespeichert. Im darauffolgenden Schritt 303 wird die mittlere Bremskraft über Filterung und/oder Mittelung der von der Gleitschutz bzw. Traktionssteuerung realisierten Kraft ermittelt. Im weiteren Verlauf der Steuerung kann die mittlere Bremskraft Ergebnis einer Makroschlupfregelung (dann als "Fm_Mak" gekennzeichnet) oder einer Mikroschlupfregelung (dann als "Fm_Mik" gekennzeichnet) sein. Die mittlere Bremskraft Fm_Mik im Mikroschlupfbereich entspricht dabei nicht zwangsläufig der potentiell verfügbaren Kraft F0 im Mikroschlupfbereich. Sie ergibt sich aus dem Zusammenspiel des vorhandenen Kraftschlusses und den Eigenschaften der Funktion Mikroschlupfregelung und beinhaltet damit gleichzeitig den Wirkungsgrad der Mikroschlupfregelung.

Des Weiteren wird im Schritt 303 auch ein Reibweg sRB bspw. als Produkt aus Differenzgeschwindigkeit zwischen Radsatz und Fahrzeug und der Zeit aufsummiert. Selbstverständlich kann der Reibweg auch auf eine andere geeignete Weise als als zeitabhängig aufsummierter Schlupf ermittelt werden.

Die achsen- oder radspezifischen mittleren Kräfte Fm_Mik bzw. Fm_Mak und potentiellen Kräfte F0 sowie die eingebrachten Reibwege werden dann im Schritt 304 über das System hinweg nochmals gemittelt. Die Entscheidung über den Verbleib im Makroschlupfbereich basiert somit auf dem gesamten Systemzustand (durch das Symbol "Σ" gekennzeichnet) und nicht auf den Eigenschaften einzelner Achsen oder Räder.

Im Schritt 305 wird dann festgestellt, ob ein für die Zuverlässigkeit der Entscheidung über den Verbleib im Makroschlupfbereich ausreichender Gesamtreibweg $\Sigma sRB$ des Systems eingebracht wurde. Falls nicht, springt der Ablauf zurück zum Schritt 304 und die Aufsummierung des Reibwegs wird forgesetzt. Falls im Schritt 305 ein ausreichender Gesamtreibweg $\Sigma sRB$ des Systems festgestellt wurde, erfolgt im Schritt 306 eine Bewertung dahingehend, ob die Makroschlupfregelung und der Kraftschluss harmonieren. Dies geschieht dadurch, dass die im Makroschlupfbereich erzielte mittlere Systembremskraft $\Sigma Fm\_Mak$ und die im Mikroschlupfbereich potentiell verfügbare und mit einem Faktor k (z.B. 0,5<k<1,5 odgl.) bewertete Systemkraft $\Sigma kF0$ verglichen werden.

Bei ausreichender Makroschlupfwirkung, d.h., wenn die im Makroschlupfbereich erzielte mittlere Systembremskraft $\Sigma Fm\_Mak$ größer ist, als die im Mikroschlupfbereich potentiell verfügbare und bewertete Systemkraft $\Sigma kF0$, springt der Ablauf zurück zum Schritt 301 (alternativ zum Schritt 302) und der Makroschlupfbereich wird beibehalten.

Andernfalls, bei unzureichender Makroschlupfwirkung, d.h., wenn die im Makroschlupfbereich erzielte mittlere Systembremskraft $\Sigma Fm\_Mak$ nicht größer ist, als die im Mikroschlupfbereich potentiell verfügbare und bewertete Systemkraft $\Sigma kF0$, erfolgt im Schritt 307 der Übergang des Systems in den Mikroschlupfbereich. Dabei werden alle Achsen zunächst im Mikroschlupfbereich geregelt. Davon abweichend kann im Schritt 308 optional stets zumindest eine der Achsen als Testachse (TA) während einer Testphase im Zustand der Makroschlupfregelung gehalten werden. Im anschließenden Schritt 309 wird der Reibweg der Testachse aufsummiert und geprüft, ob ein ausreichender Reibweg sRB der Testachse in der Testphase eingebracht wurde. Falls nicht, wird der Schritt 309 so lange wiederholt, bis ein ausreichender Reibweg eingebracht wurde. Die Testphase der Testachse wird dann nach Feststellung eines ausreichend eingebrachten Reibwegs beendet und der Ablauf schreitet zum Schritt 310.

Durch Vergleich der zwischenzeitlich ermittelten mittleren achsenbezogenen Bremskraft der Testachse mit der im Mikroschlupfbereich potentiell verfügbaren und bewerteten Kraft kF0 wird im Schritt 310 festgestellt, ob die Kraftschlusswirkung der Testachse im Makroschlupfbereich ausreichend ist. Falls dem so ist, schreitet der Ablauf zum Schritt 311. Bei unzureichender Kraftschlusswirkung im Makroschlupfbereich, d.h., wenn die im Makroschlupfbereich erzielte mittlere Bremskraft Fm_Mak der Testachse nicht größer ist, als die im Mikroschlupfbereich potentiell verfügbare Kraft F0, schreitet der Ablauf zum Schritt 311, wo ein Übergang der Testachse in den Mikroschlupfbereich erfolgt.

Nach Ende des Makroschlupftests im Schritt 309 kann die Achse nach entsprechenden Kriterien auch selbstständig über den Verbleib im Makroschlupfbereich oder die Rückkehr in den Mikroschlupfbereich entscheiden. Die Achse für den nächsten Makroschlupftest kann dann aus dem "Pool" der verbleibenden mikroschlupfgeregelten Achsen ausgewählt werden. Somit befinden sich dann trotz des Systemzustands Mikroschlupf eine oder mehrere Achsen im Zustand der Makroschlupfregelung.

Schließlich schreitet der Ablauf zum Schritt 312, in dem wiederum die mittlere Bremskraft über Filterung und/oder Mittelung der von der Gleitschutz bzw. Traktionssteuerung realisierten Kraft ermittelt wird. Die achsen- oder radspezifischen mittleren Kräfte Fm_Mik bzw. Fm_Mak werden dann im Schritt 313 über das System hinweg nochmals gemittelt. Abschließend wird dann im Schritt 314 die erzielte mittlere Systembremskraft der Achsen im Mikroschlupfbereich mit derjenigen der Achsen im Makroschlupfbereich verglichen. Übersteigt der Mittelwert der Bremskräfte der Achsen im Makroschlupfbereich denjenigen der Achsen im Mikroschlupfbereich, so springt der Ablauf zurück zum Schritt 301 und das System wechselt wieder in den Makroschlupfbereich. Andernfalls verbleibt das System im Mikroschlupfbereich und der Ablauf springt zurück zum Schritt 308, wo eine neue Testachse in den Makroschlupfbereich versetzt wird.

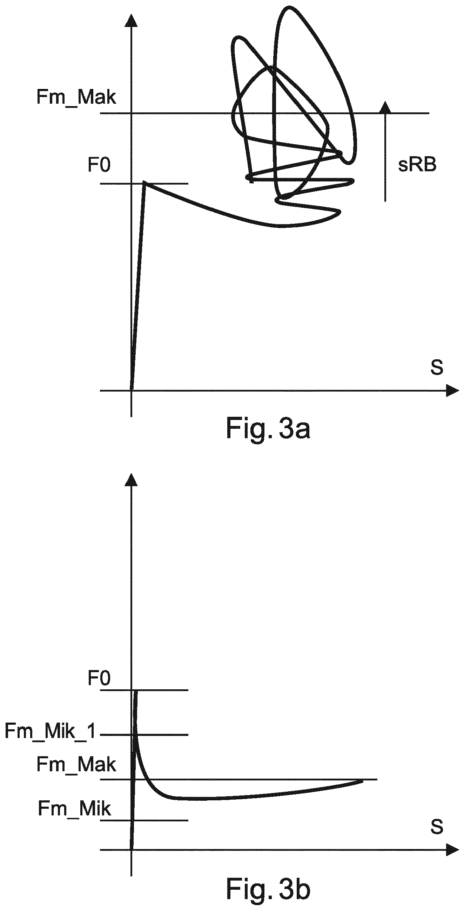

Die Figuren 3a und 3b zeigen beispielhafte qualitive Verläufe einer Kraftsschlussbeanspruchung-Schlupf-Kurve bei unterschiedlichen Kraftschlusstypen unter Verwendung der vorgeschlagenen Gleitschutzsteuerung, wobei die horizontale Achse dem Schlupf S und die vertikale Achse der Kraftschlussbeanspruchung entspricht.

In Fig. 3a beginnt die Gleitschutzsteuerung im Makroschlupfbereich. Mit zunehmendem Schlupf S steigt die Kraftschlussbeanspruchung steil an und fällt nach Erreichen eines zumindest lokalen Maximalwerts (der der im Mikroschlupfbereich maximal verfügbaren Kraft F0 entspricht) langsam ab. Bei weiterem Ansteigen des Schlupfes wird das Bremssystem instabil und die Gleitschutzregelung greift verstärkt ein. Je nach den Reibungsverhältnissen am Rad-Schiene-Kontaktpunkt ergibt sich unter dem Einfluss der Gleitschutz- bzw. Traktionssteuerung ein sich fortlaufend änderndes Verhältnis zwischen Schlupf und Kraftschluss. Der zeitliche Verlauf dieser Änderungen ist durch die komplexe Linienführung in Fig. 3a oben gezeigt. Der Pfeil in Fig. 3a stellt die Zunahme des Reibwegs sRB dar, der durch Aufsummieren des Produkts aus Differenzgeschwindigkeit zwischen Radsatz und Fahrzeug und der Zeit ermittelt wird.

Ferner ist in Fig. 3a auch eine mittlere Bremskraft Fm_Mak im Makroschlupfbereich auf der vertkalen Achse angedeutet, die über Filterung und Mittelung der zeitlichen Änderung der durch die Gleitschutz- bzw. Traktionssteuerung erzielten Bremskräfte ermittelt wird. Diese mittlere Bremskraft kann erfindungsgemäß für eine Entscheidung über den Wechsel zwischen Makroschlupfbereich und Mikroschlupfbereich herangezogen werden, wie oben erläutert wurde. Im beispielhaften Kraftschlussszenario der Fig. 3a übersteigt die mittlere Bremskraft im Makroschlupfbereich die im Mikroschlupfbereich maximal verfügbare Kraft F0. Somit würde die Gleitschutzregelung hier den Makroschlupfbereich beibehalten.

In Fig. 3b ist ein anderes beispielhaftes Kraftschlussszenario dargestellt. Wieder beginnt die Gleitschutzsteuerung im Mikroschlupfbereich. Auch hier steigt die Kraftschlussbeanspruchung mit zunehmendem Schlupf S steil an und fällt nach Erreichen einer verfügbaren Maximalkraft F0 ab. Die Kraftschlussbeanspruchung ist hier aufgrund einer geringeren Reibung am Rad-Schiene-Kontaktpunkt geringer. Ein mit eingebrachtem Reibweg signifikanter Anstieg der mittleren Bremskraft Fm_Mak im Makroschlupfbereich findet hier nicht statt. Da Fm_Mak deutlich kleiner ist als die im Mikroschlupfbereich verfügbare Kraft F0, wird die Gleitschutzregelung das System zunächst in den Mikroschlupfbereich versetzen.

In einem ersten Fall ist die mittlere Bremskraft Fm_Mak im Makroschlupfbereich größer als die mittlere Bremskraft Fm_Mik im Mikroschlupfbereich. Die Gleitschutzregelung wird das System somit im ersten Fall wieder in den Makroschlupfbereich zurückversetzen, sofern dieses Vergleichergebnis auch bei einer Mittelung über alle im Makroschlupfbereich betriebenen Achsen und alle im Mikroschlupfbereich betriebenen Achsen gültig bleibt.

In einem zweiten Fall ist die mittlere Bremskraft Fm_Mak im Makroschlupfbereich kleiner als die hier ermittelte mittlere Bremskraft Fm_Mik_1 im Mikroschlupfbereich. Die Gleitschutzregelung wird das System somit im zweiten Fall im Mikroschlupf weiterbetreiben, sofern dieses Vergleichergebnis auch bei einer Mittelung über alle im Makroschlupfbereich betriebenen Achsen und alle im Mikroschlupfbereich betriebenen Achsen gültig bleibt.

Die unterschiedlichen mittleren Bremskräfte Fm_Mik und Fm_Mik_1 im Mikroschlupfbereich können bspw. Ergebnis eines unterschiedlichen Wirkungsgrades der Mikroschlupfregelung sein.

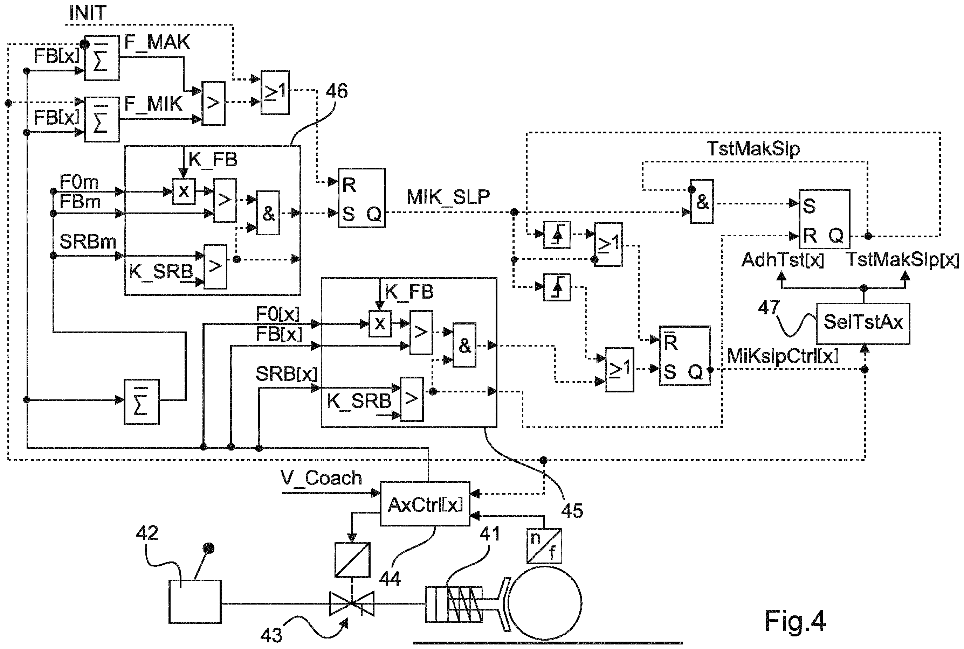

Fig. 4 zeigt ein Funktionsblockschaltbild einer Gleischutzsteuervorrichtung mit Adaptionsfunktion gemäß einem zweiten Ausführungsbeispiel.

Das Funktionsblockschaltbild umfasst eine Vielzahl logischer Verknüpfungsglieder und bistabiler Kippstufen (Flipflops), mittels denen die gewünschte Steuerfunktion realisiert ist.

Die Bremsanlage kann über eine Bremshebeleinrichtung 42 manuell gesteuert werden. Die Bremshebeleinrichtung steuert eine Ventileinrichtung 43, die einen Kolben 41 einer Bremseinrichtung mit Druckluft beaufschlagt. Ein Gleitschutzsteuerblock 44 führt eine Gleitschutzsteuerung durch entsprechendes Ansteuern der Ventileinrichtung 43 durch.

Es werden die Systemzustände Makroschlupf (binärer Parameter *MIK_SLP* im Zustand *"FALSE"*) und Mikroschlupf (binärer Parameter *MIK_SLP* im Zustand *"TRUE"*) am Ausgang des mittleren RS-Flipflops rechts neben dem Block 46 unterschieden. Der Zustand am Ausgang dieses Systemzustands-Flipflops zeigt also an, ob der Makroschlupfbereich oder der Mikroschlupfbereich aktiviert ist.

Beim Initialisieren des Systems über den Parameter *INIT* (links oben in Fig. 4), der dabei auf *"TRUE"* gesetzt wird, wird das Systemzustands-Flipflop über ein mit dessen Rücksetzeingang (R) verbundenes ODER-Glied ("≥1") zurückgesetzt. Folglich wird der Parameter *MIK_SLP* in den Zustand *"FALSE"* versetzt und das System arbeitet zu Beginn im Makroschlupfbereich. Im Makroschlupf-Zustand arbeiten alle Regelkanäle *(AxCtrl[x])* des Gleitschutzsteuerblocks 44 mit bewährten herkömmlichen Makroschlupfsollwerten. Folglich ist der Mikroschlupfsollwertparameter *MiKslpCtrl[x]* am negierten Ausgang des RS-Flipflops links neben dem Block 47 auf den logischen Zustand *"FALSE"* gesetzt. Die mittleren Summenkräfte *(F0m, FBm)* und der Summenreibweg *(SRBm)* werden durch gemittelte Summenbildung über die vom Gleitschutzsteuerblock 44 zur Verfügung gestellten individuellen Rad-Schiene-Kontakt-Werte der im Mikroschlupfbereich verfügbaren Kraft *F0[x]*, der aktuellen Bremskraft *FB[x]*, und des Reibwegs *SRB[x])* der jeweiligen Regelkanäle hinweg in einem Summierglied gebildet.

Die Beurteilung der Wirksamkeit der Makroschlupfregelung erfolgt bei Vorliegen eines ausreichenden Reibweges *(SRBm),* durch das Gegenüberstellen der erzielten Kraft *(FBm)* mit der im Mikroschlupfbereich potentiell verfügbaren Kraft *(F0m)* in dem Systemvergleichsblock 46. Solange ausreichende Makroschlupfwirkung vorliegt, wird das Systemzustands-Flipflop nicht über seinen Setzeingang (S) gesetzt und der Parameter *MIK_SLP* verbleibt im Zustand *"FALSE",* da das System dann im Makroschlupf-Zustand verbleiben soll. Bei unzureichender Makroschlupfwirkung wird das Systemzustands-Flipflop aufgrund des Wechsels des Logikzustands am Ausgang des Vergleichsblocks 46 gesetzt und das System wechselt aufgrund der sich ergebenden Zustandsänderung des Parameters *MIK_SLP* auf *"TRUE"* in den Mikroschlupf-Zustand.

Im Mikroschlupf-Zustand starten alle Regelkanäle zunächst im Mikroschlupfbereich (Parameter *MiKslpCtrl[x]* im Zustand *"TRUE").* Parallel dazu befindet sich stets eine über einen Testachsenauswahlblock 47 ausgewählte Achse *(AdhTst[x])* in einer Testphase *(TstMakSlp[x])* mit dem Makroschlupf-Zustandregelung (Parameter *MiKslpCtrl[x]* im Zustand *"FALSE").*

Wenn die Beurteilung der Wirksamkeit der Makroschlupfregelung für die Testachse *(TstMakSlp[x])* möglich ist, verlässt die Achse die Testphase und der Verbleib der Achse im Makroschlupfbereich wird beurteilt. Die Beurteilung erfolgt im Achsenvergleichsblock 45 nach den gleichen Regeln wie auf Systemebene, aber achsweise. Die Achse entscheidet nach dem Verlassen der Testphase selbstständig über den Verbleib im Makroschlupf (Parameter *MiKslpCtrl[x]* im Zustand *"FALSE").*

Im Mikroschlupf-Zustand kommt es somit zu einem gemischten Betrieb von Achsen im Mikroschlupf und Makroschlupfbereich. Je nach Kraftschlusssituation mit unterschiedlicher Verteilung.

Ein gemittelter Wert (F_MIK) der erzielten Bremskräfte der Achsen im Mikroschlupfbereich wird mit einem gemittelten Wert (F_MAK) der erzielten Bremskräfte der Achsen im Makroschlupfbereich in einem Vergleichsglied (">") links oben in Fig. 4 verglichen. Überschreiten die Bremskräfte der Makroschlupfachsen die der Mikroschlupfachsen wird das Systemzustands-Flipflop über das ODER-Glied zurückgesetzt, der Mikroschlupf-Zustand verlassen, und das System wechselt in den Makroschlupf-Zustand.

Abschließend sei noch angemerkt, dass die Steuerung in den vorstehend beschriebenen Ausführungsbeispielen auch in umgekehrten Reihenfolge beginnen kann. D.h., die Steuerung versetzt das System zuerst in den Mikroschlupf-Systemzustand und prüft dann, ob der Makroschlupf-Systemzustand zu einer ausreichenden (g.h. höheren oder zumindest gleichwertigen) Bremsleistung führt. Ein solches Vorgehen kann bspw. bei anderer Normenlage sinnvoll sein.

Zusammenfassend wurden eine Vorrichtung und ein Verfahren zur adaptiven Ansteuerung einer Bremsanlage eines Schienenfahrzeugs beschrieben, wobei die Bremsanlage nach Maßgabe eines vorbestimmten ersten und zweiten Schlupfparameterbereichs gesteuert wird, wobei der erste Schlupfparameterbereich ein Makroschlupfbereich mit höherem zulässigen Schlupfbereich ist und der zweite Schlupfparameterbereich ein Mikroschlupfbereich mit niedrigerem zulässigen Schlupfbereich ist, und wobei eine maximal im Mikroschlupfbereich verfügbare Bremskraft und eine im aktuellen Schlupfbereich erzielte mittlere Bremskraft der Bremsanlage bestimmt werden. Ein Übergang von dem Makroschlupfbereich in den Mikroschlupfbereich wird veranlasst, wenn ein Vergleich der bestimmten mittleren Bremskraft im Makroschlupfbereich mit der maximal im Mikroschlupfbereich verfügbaren Bremskraft eine unzureichende Schlupfwirkung anzeigt. Alternativ kann ein Übergang von dem Mikroschlupfbereich in den Makroschlupfbereich veranlasst werden, wenn ein Vergleich der bestimmten mittleren Bremskraft im Makroschlupfbereich mit der maximal im Mikroschlupfbereich verfügbaren Bremskraft eine ausreichende Schlupfwirkung anzeigt.

**Patentansprüche**

1. Vorrichtung (51) zur adaptiven Ansteuerung einer Bremsanlage (56, 60) eines Schienenfahrzeuges mittels einer Gleitschutzsteuerfunktion, die ein Blockieren eines Rads (52) des Schienenfahrzeuges bei ungünstigen Adhäsionsbedingungen im Rad-Schiene-Kontakt verhindert, indem die Gleitschutzsteuerfunktion die Bremsanlage (56, 60) nach Maßgabe eines vorbestimmten ersten und zweiten Schlupfparameterbereichs steuert, wobei der erste Schlupfparameterbereich ein Makroschlupfbereich mit höherem zulässigen Schlupfbereich ist und der zweite Schlupfparameterbereich ein Mikroschlupfbereich mit niedrigerem zulässigen Schlupfbereich ist, **dadurch gekennzeichnet, dass** die Vorrichtung (51) umfasst:

- Maximalkraftbestimmungsmittel (302) zum Bestimmen einer maximal im Mikroschlupfbereich verfügbaren Bremskraft;
- Bremskraftbestimmungsmittel (303, 304) zum Bestimmen einer im aktuellen Schlupfbereich erzielten mittleren Bremskraft der Bremsanlage (56, 60);
- Vergleichsmittel (306) zum Vergleichen der bestimmten mittleren Bremskraft im Makroschlupfbereich mit der maximal im Mikroschlupfbereich verfügbaren Bremskraft; und
- Schupfbereichseinstellmittel (301, 307) zum Einstellen des Makroschlupfbereichs oder des Mikroschlupfbereichs;
- wobei die Vorrichtung ausgestaltet ist, die Schlupfbereichseinstellmittel (301, 307) im Ansprechen auf ein eine unzureichende Schlupfwirkung im Makroschlupfbereich anzeigendes Vergleichsergebnis der Vergleichsmittel (306) zum Veranlassen eines Übergangs von dem Makroschlupfbereich in den Mikroschlupfbereich anzusteuern oder im Ansprechen auf ein eine ausreichende Schlupfwirkung im Makroschlupfbereich anzeigendes Vergleichsergebnis der Vergleichsmittel (314) zum Veranlassen eines Übergangs von dem Mikroschlupfbereich in den Makroschlupfbereich anzusteuern.

2. Vorrichtung nach Anspruch 1, wobei die Vorrichtung (51) ausgestaltet ist, den Vergleich durch die Vergleichsmittel (306) im Ansprechen auf ein Erreichen eines vorbestimmten Reibwegs zu veranlassen.

3. Vorrichtung nach Anspruch 2, wobei die Vorrichtung (51) ausgestaltet ist, den Reibweg als Produkt aus der Zeit und der Differenzgeschwindigkeit zwischen dem Rad (52) und dem Schienenfahrzeug zu ermitteln.

4. Vorrichtung nach einem der vorgehenden Ansprüche, wobei die Vorrichtung (51) ausgestaltet ist, bei einem Übergang in den Mikroschlupfbereich zumindest eine Achse des Schienenfahrzeugs als Testachse für eine Testphase im Makroschlupfbereich zu belassen.

5. Vorrichtung nach Anspruch 4, wobei Vorrichtung (51) ausgestaltet ist, die Testphase der Testachse bei Erreichen eines vorbestimmten eingebrachten Reibwegs oder einer maximalen Testzeit zu beenden.

den.

6. Vorrichtung nach Anspruch 4 oder 5, wobei die Vorrichtung (51) ausgestaltet ist, die Schlupfbereichseinstellmittel (301, 307) zum Beenden des Makroschlupfbereichs der Testachse anzusteuern, wenn die mittlere Bremskraft an der Testachse geringer ist, als die mit einem Faktor bewertete maximal im Mikroschlupfbereich verfügbare Bremskraft.

7. Vorrichtung nach einem der vorhergehenden Ansprüche, wobei die Vorrichtung (51) weitere Vergleichsmittel (314) aufweist, zum Vergleichen der mittleren Bremskraft von im Makroschlupfbereich betriebenen Achsen mit der mittleren Bremskraft von im Mikroschlupfbereich betriebenen Achsen, und wobei die Vorrichtung die Schupfbereichseinstellmittel (301, 307) veranlasst, alle Achsen der Bremsanlage im Makroschlupfbereich zu betreiben, wenn die mittlere Bremskraft der im Makroschlupfbereich betriebenen Achsen die mittlere Bremskraft der im Mikroschlupfbereich betriebenen Achsen übersteigt, oder alle Achsen der Bremsanlage im Mikroschlupfbereich zu betreiben, wenn die mittlere Bremskraft der im Mikroschlupfbereich betriebenen Achsen die mittlere Bremskraft der im Makroschlupfbereich betriebenen Achsen übersteigt.

8. Vorrichtung nach Anspruch 7, wobei die Vorrichtung so ausgestaltet ist, dass die mittlere Bremskraft der Achsen durch Aufsummieren mittlerer Bremskräfte der jeweiligen Achsen ermittelt wird.

9. Vorrichtung nach einem der vorhergehenden Ansprüche, wobei die Maximalkraftbestimmungsmittel (302) ausgestaltet sind, die maximal im Mikroschlupfbereich verfügbare Bremskraft beim vollständigen Übergang des Rad-Schiene-Kontakts in eine Gleitphase durch Korrelieren mit der dazu notwendigen Kraft zu ermitteln.

10. Verfahren zur adaptiven Ansteuerung einer Bremsanlage (56, 60) eines Schienenfahrzeuges in der Weise, dass ein Blockieren eines Rads (52) des Schienenfahrzeuges bei ungünstigen Adhäsionsbedingungen im Rad-Schiene-Kontakt verhindert wird, wobei die Bremsanlage (56, 60) nach Maßgabe eines vorbestimmten ersten und zweiten Schlupfparameterbereichs gesteuert wird, wobei der erste Schlupfparameterbereich ein Makroschlupfbereich mit höherem zulässigen Schlupfbereich ist und der zweite Schlupfparameterbereich ein Mikroschlupfbereich mit niedrigerem zulässigen Schlupfbereich ist, **dadurch gekennzeichnet, dass** das Verfahren die nachfolgenden Schritte umfasst:

- Bestimmen (302) einer maximal im Mikroschlupfbereich verfügbaren Bremskraft;

- Bestimmen (303, 304) einer im aktuellen Schlupfbereich erzielten mittleren Bremskraft der Bremsanlage;

- Vergleichen (306) der bestimmten mittleren Bremskraft im Makroschlupfbereich mit der maximal im Mikroschlupfbereich verfügbaren Bremskraft; und

- Veranlassen (307) eines Übergangs von dem Makroschlupfbereich in den Mikroschlupfbereich im Ansprechen auf ein eine unzureichende Schlupfwirkung im Makroschlupfbereich anzeigendes Vergleichsergebnis des Vergleichsschrittes (306), oder eines Übergangs von dem Mikroschlupfbereich in den Makroschlupfbereich im Ansprechen auf ein eine ausreichende Schlupfwirkung im Makroschlupfbereich anzeigendes Vergleichsergebnis des Vergleichschrittes (314).

11. Computerprogramm mit Codemitteln zum Durchführen der Schritte gemäß Patentanspruch 10, wenn das Programm auf einer Computervorrichtung ausgeführt wird.

**Claims**

1. A device (51), for adaptively actuating a brake system (56, 60) of a rail vehicle by means of an anti-skid control function, that prevents the locking of a wheel (52) of the rail vehicle in unfavourable adhesion conditions in the wheel-rail contact in that the anti-skid control function controls the brake system (56, 60) in accordance with a predetermined first and second slip parameter range, the first slip parameter range being a macro-slip range with a relatively high permissible slip range and the second slip parameter range being a micro-slip range with a relatively low permissible slip range, **characterised in that** the device (51) comprises:

- maximum force-determining means (302) for determining a maximum braking force available in the micro-slip range;
- braking force-determining means (303, 304) for determining an average braking force of the brake system (56, 60) achieved in the slip range at a given point in time;
- comparison means (306) for comparing the determined average braking force in the macro-slip range with the maximum available braking force in the micro-slip range; and
- slip range-setting means (301, 307) for setting the macro-slip range and the micro-slip range;
- the device being designed to actuate the slip range-setting means (301, 307) in response to a comparison result of the comparison means (306) indicating an insufficient slipping effect in the macro-slip range in order to bring about a transition from the macro-slip range into the micro-slip range, or in response to a comparison result of the comparison means (314) indicating a sufficient slipping effect in the macro-slip range in order to bring about a transition from the micro-slip range to the macro-slip range.

2. A device according to claim 1, the device (51) being designed to bring about the comparison by the comparison means (306) in response to the achievement of a predetermined friction travel.

3. A device according to claim 2, the device (51) being designed to determine the friction travel as a product of the time and the differential speed between the wheel (52) and the rail vehicle.

4. A device according to any one of the preceding claims, the device (51) being designed to leave at least one axle of the rail vehicle in the macro-slip range as a test axle for a test phase during a transition to the micro-slip range,.

5. A device according to claim 4, the device (51) being designed to end the test phase of the test axle when a predetermined introduced friction travel or a maximum test time is reached.

6. A device according to claim 4 or 5, the device (51) being designed to actuate the slip range-setting means (301, 307) to end the macro-slip range of the test axle if the average braking force at the test axle is lower than the maximum braking force available in the micro-slip range evaluated with a factor.

7. A device according to any one of the preceding claims, the device (51) having further comparison means (314) for comparing the average braking force of axles operated in the macro-slip range with the average braking force of axles operated in the micro-slip range, and the device causing the slip range-setting means (301, 307) to operate all the axles of the brake system in the macro-slip range if the average braking force of the axles operated in the macro-slip range exceeds the average braking force of the axles operated in the micro-slip range, or to operate all the axles of the brake system in the micro-slip range if the average braking force of the axles operated in the micro-slip range exceeds the average braking force of the axles operated in the macro-slip range.

8. A device according to claim 7, the device being designed in such a way that the average braking force of the axles is determined by adding together the average braking forces of the respective axles.

**9.** A device according to any one of the preceding claims, the maximum force-determining means (302) being configured to determine the maximum braking force available in the micro-slip range at complete transition of the wheel-rail contact into a skidding phase by correlation with the force necessary for this purpose.

**10.** A method for adaptively actuating a brake system (56, 60) of a rail vehicle in such a way as to prevent the locking of a wheel (52) of the rail vehicle in unfavourable adhesion conditions in the wheel-rail contact, the brake system (56, 60) being controlled in accordance with a predetermined first and second slip parameter range, the first slip parameter range being a macro-slip range with a relatively high permissible slip range and the second slip parameter range being a micro-slip range with a relatively low permissible slip range, **characterised in that** the method comprises the following steps:

- the determination (302) of a maximum braking force available in the micro-slip range;
- the determination (303, 304) of an average braking force of the brake system achieved in the slip range at a given point in time;
- the comparison (306) of the determined average braking force in the macro-slip range with the maximum available braking force in the micro-slip range; and
- the bringing about (307) of a transition from the macro-slip range to the micro-slip range in response to a comparison result of the comparison step (306) indicating insufficient slipping effect in the macro-slip range, or of a transition from the micro-slip range to the macro-slip range in response to a comparison result of the comparison step (314) indicating a sufficient slipping effect in the macro-slip range.

**11.** A computer program having code means for carrying out the steps according to patent claim 10 when the program is executed on a computer device.

**Revendications**

**1.** Dispositif (51) de commande adaptative d'un système (56, 60) de frein d'un véhicule ferroviaire, au moyen d'une fonction de commande de l'anti-enrayage, qui empêche un blocage d'une roue (52) du véhicule ferroviaire, si les conditions d'adhérence du contact roue-rail sont défavorables, par le fait que la fonction de commande d'anti-enrayage commande le système (56, 60) de frein, en fonction d'une première et d'une deuxième plages de paramètre de glissement déterminée à l'avance, la première plage de paramètre de glissement étant une plage de macro-glissement ayant une plage de glissement admissible plus grande et la deuxième plage de paramètre de glissement étant une micro-plage de glissement ayant une plage de glissement admissible plus petite, **caractérisé en ce que** le dispositif (51) comprend :

- des moyens (302) de détermination de la force maximum pour déterminer une force de freinage maximum disponible dans la micro-plage de glissement ;
- des moyens (303, 304) de détermination de force de frein pour déterminer une force de frein moyenne du système (56, 60) de frein obtenue dans la plage de glissement en cours ;
- des moyens (306) de comparaison pour comparer la force de frein moyenne déterminée dans la macro-plage de glissement à la force de frein disponible dans la micro-plage de glissement ; et
- des moyens (301, 307) de réglage de la plage de glissement pour établir la macro-plage de glissement ou la micro-plage de glissement ;
- dans lequel le dispositif est conformé pour commander les moyens (301, 307) d'établissement de la plage de glissement, en réaction à un résultat de comparaison indiquant un effet de glissement insuffisant dans la macro-plage de glissement des moyens (306) de comparaison, pour provoquer un passage de la macro-plage de glissement à la micro-plage de glissement ou, en réaction à un résultat de comparaison indiquant un effet de glissement suffisant dans la macro-plage de glissement des moyens (314) de comparaison, pour provoquer un passage de la micro-plage de glissement à la macro-plage de glissement.

**2.** Dispositif suivant la revendication 1, dans lequel le dispositif (51) est conformé pour provoquer la comparaison par les moyens (306) de comparaison lorsqu'un chemin de frottement déterminé à l'avance.

**3.** Dispositif suivant la revendication 2, dans lequel le dispositif (51) est conformé pour déterminer le chemin de frottement sous la forme du produit du temps et de la différence de vitesse entre la roue (52) et le véhicule ferroviaire.

**4.** Dispositif suivant l'une des revendications précédentes, dans lequel le dispositif (51) est conformé pour laisser, lorsque l'on passe dans la micro-plage de glissement, au moins un essieu du véhicule ferroviaire comme essieu de test pour une phase de test dans la macro-plage de glissement.

**5.** Dispositif suivant la revendication 4, dans lequel le dispositif (51) est conformé pour mettre fin à la phase de test de l'essieu de test, lorsqu'est atteint un trajet de frottement déterminé à l'avance ou un temps de test maximum.

**6.** Dispositif suivant la revendication 4 ou 5, dans lequel le dispositif (51) est conformé pour commander les moyens (301, 307) d'établissement d'une plage de glissement pour mettre fin à la macro-plage de glissement de l'essieu de test, si la force de frein moyenne sur l'essieu de test est plus petite que la force de frein disponible au maximum dans la micro-plage de glissement évaluée par un facteur.

**7.** Dispositif suivant l'une des revendications précédentes, dans lequel le dispositif (51) a d'autres moyens (314) de comparaison pour comparer la force de frein moyenne d'essieu fonctionnant dans la macro-plage de glissement à la force de frein moyenne d'essieu fonctionnant dans la micro-plage de glissement et dans lequel le dispositif fait que les moyens (301, 307) d'établissement de la plage de glissement font fonctionner tous les essieux du système de frein dans la macro-plage de glissement, si la force de frein moyenne des essieux fonctionnant dans la macro-plage de glissement dépasse la force de frein moyenne des essieux fonctionnant dans la micro-plage de glissement ou font fonctionner tous les essieux du système de frein dans la micro-plage de glissement, si la force de frein moyenne des essieux fonctionnant dans la micro-plage de glissement dépasse la force de frein moyenne des essieux fonctionnant dans la macro-plage de glissement.

**8.** Dispositif suivant la revendication 7, dans lequel le dispositif est conformé de manière à déterminer la force de frein moyenne des essieux par sommation de forces de frein moyennes des essieux respectifs.

**9.** Dispositif suivant l'une des revendications précédentes, dans lequel les moyens (302) de détermination de la force maximum sont conformés pour déterminer la force de frein disponible au maximum dans la micro-plage de glissement lors du passage complet du contact roue-rail à une phase de glissement par corrélation avec la force nécessaire à cet effet.

**10.** Procédé de commande adaptatif d'un système (56, 60) de frein d'un véhicule ferroviaire, de manière à empêcher un blocage d'une roue (52) du véhicule ferroviaire, si les conditions d'adhérence du contact roue-rail sont défavorables, le système (56, 60) de frein étant commandé en proportion d'une première et d'une deuxième plages de paramètre de glissement déterminé à l'avance, la première plage de paramètre de glissement étant une macro-plage de glissement ayant une plage de glissement admissible plus grande et la deuxième plage de paramètre de glissement une micro-plage de glissement ayant une plage de glissement admissible plus petite, **caractérisé en ce que** le procédé comprend les stades suivants :

- détermination (302) d'une force de frein disponible au maximum dans la micro-plage de glissement ;
- détermination (303,304) d'une force de frein moyenne du système de frein obtenue dans la plage de glissement en cours ;
- comparaison (306) de la force de frein moyenne déterminée dans la macro-plage de glissement à la force de frein disponible au maximum dans la micro-plage de glissement ; et
- on provoque (307) un passage de la macro-plage de glissement à la micro-plage de glissement en réaction à un résultat du stade (306) de comparaison indiquant un effet de glissement insuffisant dans la macro-plage de glissement, ou un passage de la micro-plage de glissement à la macro-plage de glissement en réaction à un résultat du stade (314) de comparaison indiquant un effet de glissement suffisant dans la macro-plage de glissement.

**11.** Programme d'ordinateur ayant des moyens de code pour effectuer les stades suivant la revendication 10, lorsque le programme est réalisé sur un dispositif d'ordinateur.

Fig. 1

Fig. 2

Fig. 3a

Fig. 3b

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006057813 A1

- WO 2006113954 A1